# EUROPÄISCHE PATENTSCHRIFT

(11) **EP 1 467 446 B1**
(45) Veröffentlichungstag und Bekanntmachung des Hinweises auf die Patenterteilung: **20.07.2005**
(21) Anmeldenummer: 03008261.4
(22) Anmeldetag: 09.04.2003
(51) Int. Cl.: H01R 31/06, H01R 24/06

(54) **Spannungswandler mit Klappgehäuse**
Voltage converter with folding housing
Convertisseur de tension avec boîtier pliant

(43) Veröffentlichungstag der Anmeldung: 13.10.2004
(73) Patentinhaber: Friwo Mobile Power GmbH, 48346 Ostbevern (DE)
(72) Erfinder: Bothe, Michael, 48163 Münster (DE); Van gen Hassend, Kay, 48157 Münster (DE); Becks, Michael, 48291 Telgte (DE)
(74) Vertreter: Grünecker, Kinkeldey, Stockmair & Schwanhäusser Anwaltssozietät

(56) Entgegenhaltungen:
- DE-A- 19 704 130
- US-A- 4 636 703
- US-A- 6 057 610

## Beschreibung

Die Erfindung betrifft einen Spannungswandler zum Laden mobiler Endgeräte der Kommunikations- und Unterhaltungstechnik, wie Mobiltelefone, MP3-Spieler oder PDAs, mit einem Gehäuse, das einen in einer Einsteckrichtung an eine Netzspannungsquelle anschließbaren Netzstecker, einen an ein Endgerät anschließbar ausgestalteten Endgerätestecker und eine Schaltung zur Spannungswandlung wenigstens teilweise umgibt und das ein erstes Gehäuseteil und ein mit diesem durch eine Führung beweglich verbundenes zweites Gehäuseteil, das als eine das Endgerät in einer Bestückungsrichtung aufnehmende Aufnahme ausgeführt ist, umfasst, wobei die Gehäuseteile relativ zueinander von einer Transportposition in wenigstens zwei Ladepositionen beweglich ausgestaltet sind und der in der Transportposition vom Spannungswandler eingenommene Raum kleiner als in den Ladepositionen ist.

Moderne mobile Endgeräte der Kommunikations- und Unterhaltungstechnik, insbesondere MP3-Spieler, Mobiltelefone, PDAs (Personal Digital Assistants) oder ähnliche, sind mit stromspeichernden Akkueinheiten ausgestattet, so dass sie netzunabhängig betrieben werden können. Von Zeit zu Zeit müssen diese mobilen Endgeräte zum Laden der Akkueinheiten an eine Netzspannungsquelle angeschlossen werden. Da sich die verfügbare Netzspannung von der zum Lader der Akkueinheiten nötigen Ladespannung unterscheidet, muss ein Spannungswandler eingesetzt werden, um die Netzspannung auf die Ladespannung zu transformieren. Dieser Spannungswandler muss eine Anschlussmöglichkeit an eine Netzspannungsquelle besitzen und eine weitere Anschlussmöglichkeit zum Anschluss an das zu ladende mobile Endgerät besitzen.

Aus dem Stand der Technik sind verschiedene Spannungswandler zum Laden oder auch zur Stromversorgung von mobilen Endgeräten bekannt.

Bei den am häufigsten eingesetzten Spannungswandlern handelt es sich um Steckernetzgeräte, die über ein Sekundärkabel mit dem Endgerät verbunden werden. Bei einigen Spannungswandlern ist eine Schaltung zur Spannungswandlung in dem Gehäuse
eines Netzsteckers integriert. Die Sekundärseite dieser Transformatorschaltung wird im Stand der Technik mit einem Kabel steckbar mit dem Endgerät verbunden.

Nachteilig ist bei dieser Ausführungsform, dass durch die Länge des Kabels an der Sekundärseite deutliche Spannungsverluste auftreten können, die bei modernen Endgeräten unterwünscht sind. Um diesen Nachteil zu beheben, ist in der EP 1 060 559 B1 eine Vorrichtung beschrieben, bei der die Transformatorschaltung mit dem Endgerätestecker
eine starre Baueinheit bildet. Die Sekundärleitung wird so möglichst kurz gehalten. Die Baueinheit wird dann mit einem Kabel an der Primärseite der Transformatorschaltung an eine Netzspannungsquelle angeschlossen.

Ein weiteres Problem bei den aus dem Stand der Technik bekannten Spannungswandlern besteht in ihrer für den Transport unpraktischen Bauform: Spannungswandler für mobile Endgeräte werden, wie die Endgeräte selbst, of transportiert, um das Endgerät jederzeit aufladen zu können. Deshalb ist eine für den Transport günstige Bauform wichtig. Zwar wird in der US 6,462,975 B1 versucht, durch eine Klappmöglichkeit der Netzsteckerkontakte die Handlichkeit des Spannungswandler zu verbessern, doch gelingt dies nur ansatzweise, denn durch das Anschlusskabel bleibt der Spannungswandler beim Transport wenig handlich.

Darüber hinaus ergibt sich beim Betreiben der bekannten Spannungswandler das Problem, dass es keinen bestimmten Ort der Ablage des Endgerätes gibt. Das Endgerät muss irgendwo in der Nähe einer Netzsteckdose abgelegt werden, um den Spannungswandler anschließen zu können.

Ein Lösungsansatz zu den beiden oben genannten Problemen bietet die DE 202 11 132 U1. In dieser Druckschrift ist ein Reiseauflader für ein Handy beschrieben, bei dem das Netzteil, die Leitung, der Stecker und der Anschluss für das Handy in einem Hauptkörper mit einem Gehäuse zusammengebaut sind, der auf der oberen Seite einen Anschluss aufweist, auf dem das Handy stabil stehen kann. Aus dieser Ladeposition ist der Reiseauflader in der DE 202 11 132 U1 in eine Transportposition überführbar, in der bei Bedarf dem beschriebenen Reiseauflader eine separate Schutzhülle zum Schutz und zur Erleichterung des Herumtragens auf das Gehäuse aufgesteckt wird. Dennoch bleibt der beschriebene Reiseauflader durch seine Größe unhandlich, da seine Abmaße durch die aufgesteckte Schutzhülle in der Transportposition noch vergrößert werden.

In der US 4,636,703 das als nächstliegender Stand der Technik angesehen wird, ist eine Ladevorrichtung für Batterien beschrieben, die zwei beweglich miteinander verbundene Gehäuseteile hat. Die Gehäuseteile können relativ zueinander in zwei Ladepositionen und in eine Transportposition bewegt werden. In den beiden Ladepositionen ist die Größe einer Batterieaufnahme verändert, so dass unterschiedliche Batteriegrößen aufgenommen werden können.

Angesichts des Standes der Technik liegt der Erfindung daher die Aufgabe zugrunde, die aus dem Stand der Technik bekannten Spannungswandler so zu verbessern, dass die Handlichkeit verbessert wird, sowohl während des Ladens, aber vor allem während des Transportierens.

Erfindungsgemäß wird diese Aufgabe für den eingangs genannten Spannungswandler dadurch gelöst, dass in der ersten Ladeposition die Bestückungsrichtung und die Einsteckrichtung im Wesentlichen parallel und in der zweiten Ladeposition die Bestückungseinrichtung und die Einsteckrichtung im Wesentlichen quer zueinander ausgerichtet sind.

Diese erfindungsgemäße Lösung hat den Vorteil, dass sich die Größe des Spannungswandlers in der Transportposition erheblich gegenüber der Größe in der Ladeposition reduziert. Hierdurch lässt sich der Spannungswandler leicht auf Reisen mitnehmen und kann beispielsweise sogar in einer Hosentasche transportiert werden.

In der ersten Ladeposition sind die Bestückungsrichtung und die Einsteckrichtung parallel zueinander ausgerichtet, wodurch sich der Spannungswandler beispielsweise zum Laden in einer Tischsteckdose besonders eignet. Ferner sind die Bestückungsrichtung und die Einsteckrichtung in der zweiten Ladeposition im Wesentlichen quer zueinander ausgerichtet, wodurch sich der Spannungswandler zum Beispiel für das Betreiben in einer Wandsteckdose besonders eignet.

Die Leistungsfähigkeit des solchermaßen verbesserten Spannungswandlers kann durch verschiedene, voneinander unabhängige, jeweils für sich vorteilhafte Weiterbildungen gesteigert werden, wie sie im Folgenden erläutert sind.

Die Führung, durch die der zweite Gehäuseteil beweglich mit dem ersten Gehäuseteil verbunden ist, kann in einer vorteilhaften Weiterbildung mit Rastpositionen versehen sein. Dadurch können feste Positionen des ersten Gehäuseteils relativ zum zweiten Gehäuseteil definiert werden, die für unterschiedliche Aufgaben und Ladepositionen des Spannungswandlers geeignet sein können.

Die Führung zwischen dem ersten Gehäuseteil und dem zweiten Gehäuseteil kann in einer konstruktiv einfachen Ausgestaltung als Drehführung ausgestaltet sein, wodurch die beiden Gehäuseteile in unterschiedliche Winkel zueinander bringbar sind.

In einer vorteilhaften Weiterbildung kann der zweite Gehäuseteil so ausgeführt sein, dass er in der Transportposition den Netzstecker umgibt und in der Ladeposition das Endgerät aufnimmt. Der zweite Gehäuseteil dient bei dieser Ausgestaltung als Schutzgehäuse für das erste Gehäuseteil bzw. den Netzstecker. Insbesondere kann der zweite Gehäuseteil Stiftkontakte des Netzsteckers abdecken, so dass diese beim Transport sich nicht verhaken oder abbrechen können. In der Transportposition kann der Spannungswandler auch im Wesentlichen quaderförmig ausgestaltet sein, um beispielsweise in Taschen von Kleidungsstücken leicht transportiert werden zu können.

Des Weiteren ist es durch eine Weiterbildung möglich, den Spannungswandler in eine zweite Ladeposition zu bringen, in der die Gehäuseteile relativ zueinander anders angeordnet sind als in der ersten Ladeposition. Durch die unterschiedlichen Ladepositionen können unterschiedliche Lagen von Netzsteckdosen akkommodiert werden. So kann beispielsweise die eine Ladeposition für das Laden in einer Wandsteckdose und die andere Ladeposition für das Laden in einer Tischsteckdose verwendet werden. Beide Ladepositionen können durch die Rastpositionen fixiert werden.

In einer Ausgestaltung kann die Aufnahme in Form eines Schachtes ausgestaltet sein, in dem das Endgerät zum Laden in einer Bestückungsrichtung einführbar ist. Bei der Ausgestaltung des Spannungswandlers mit einer Drehführung kann der Winkel der Einschubrichtung relativ zu einer Einsteckrichtung, in die der Netzstecker in eine Netzsteckdose eingesteckt wird, verändert werden.

So kann der erste Gehäuseteil zu dem zweiten Gehäuseteil in der Transportposition beispielsweise ineinandergeklappt in einem Winkel von in etwa 0° zueinander stehen, was zu einer vorteilhaften Größe des Spannungswandlers für den Transport führt. Hierbei können die Bestückungsrichtung und die Einsteckrichtung parallel zueinander ausgerichtet sein.

In der ersten Ladeposition können die Gehäuseteile in einem Winkel im Bereich von ungefähr 165° bis 195°, bevorzugt aber von in etwa 180° zueinander stehen, wodurch sich der Spannungswandler beispielsweise zum Laden in einer Tischsteckdose besonders eignet. Ferner können die Gehäuseteile in der zweiten Ladeposition in einem Winkel im Bereich von in etwa 75° bis 90°, bevorzugt aber in einem im Wesentlichen rechten Winkel voneinander weg erstrecken, wodurch sich der Spannungswandler zum Beispiel für das Betreiben in einer Wandsteckdose besonders eignet.

Durch eine weitere Verbesserung kann der erste Gehäuseteil derart ausgestaltet sein, dass es in der Transportposition den Endgerätestecker schützend umschließt und in der Ladeposition in eine Netzsteckdose steckbar ist.

Des Weiteren kann die Führung, mit der das erste Gehäuseteil und das zweite Gehäuseteil miteinander beweglich verbunden sind, einen elektrischen Strom von dem ersten zu dem zweiten Gehäuseteil durch die Führung übertragen. Diese Ausgestaltung hat den Vorteil, dass kein beispielsweise außen verlaufendes zusätzliches Kabel benötigt wird.

Der Netzstecker kann in weiteren vorteilhaften Weiterbildungen verschiedenen Formen ausgeführt sein, um länderspezifischen Netzsteckdosen oder beispielsweise auch einer Steckdose in einem Kraftfahrzeug angepasst zu sein. Hierdurch kann der erfindungsgemäße Spannungswandler vielerorts eingesetzt werden.

Die Schaltung zur Spannungswandlung kann ferner in dem ersten Gehäuseteil integriert sein, was sich besonders platzsparend auswirkt.

Der erste Gehäuseteil kann darüber hinaus gabelförmig ausgeführt sein, wobei die Drehpunkte des zweiten Gehäuseteils im Bereich der Gabelenden angeordnet sind. Durch die Ausgestaltung als Gabel lassen sich auch breite Endgeräte in das als Aufnahme ausgestalteten zweiten Gehäuseteil einsetzen. Hierdurch wird die Gesamtgröße des Spannungswandlers reduziert.

Insbesondere ist es möglich, das zweite Gehäuseteil unabhängig von dem ersten Gehäuseteil auszugestalten und an die verschiedensten Arten von Endgerätesteckern anzupassen. Dies macht die Erfindung für viele Hersteller von Endgeräten einsetzbar, wobei lediglich das zweite Gehäuseteil ausgetauscht werden muss und das erste Gehäuseteil bei der gesamten Fertigungslinie verwendet werden kann.

Im Folgenden wird die Erfindung beispielhaft mit Bezug auf die beigefügten Zeichnungen erläutert. Die unterschiedlichen Merkmale können dabei unabhängig voneinander kombiniert werden, wie dies oben bei den einzelnen vorteilhaften Ausgestaltungen bereits dargelegt wurde.

Es zeigen:
- Fig. 1: eine Ausführungsform eines erfindungsgemäßen Spannungswandlers schematisch in einer ersten Ladeposition;
- Fig. 2: der Spannungswandler der Fig. 1 schematisch in einer zweiten Ladeposition;
- Fig. 3: der Spannungswandler der Fig. 1 in einer Transportposition.

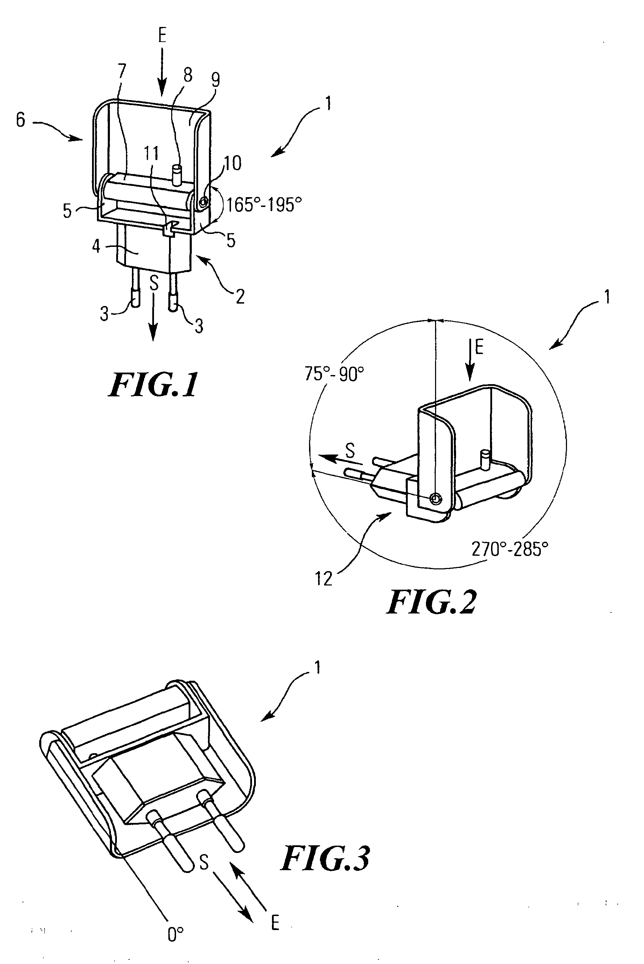

Zunächst wird der allgemeine Aufbau eines erfindungsgemäßen Spannungswandlers 1 mit Bezug auf die Fig. 1 beschrieben.

Der Spannungswandler 1 weist einen ersten Gehäuseteil 2 mit zwei Netzkontaktstiften 3 zum Anschluss an eine Netzspannungsquelle und mit einem hier sechseckig ausgeführten Grundkörper 4 auf. Der erste Gehäuseteil 2 bildet einen Netzstecker 3, 4, in dessen Innern sich die Schaltung zur Spannungswandlung (nicht dargestellt), beispielsweise ein Transformator, befindet. Der Netzstecker 3, 4 ist in einer Einsteckrichtung S in eine Netzsteckdose einsteckbar.

Der Netzstecker, bestehend aus den Netzsteckerstiften 3 und dem Netzsteckergrundkörper 4 kann, je nachdem für welche Art von Netzsteckdose er adaptierbar sein soll, in seiner Form unterschiedlich ausgeführt sein. Die in Fig. 1 dargestellte Form zeigt beispielsweise einen Euro-Stecker, wie er für den Einsatz in Europa ausgeführt wird. Andere Ausführungsformen können beispielsweise ein US-amerikanischer oder chinesischer Stecker sein. Darüber hinaus ist auch eine Ausführung mit zusätzlichem Erdungskontakt zu den Netzsteckerstiften 3 möglich.

Der erste Gehäuseteil 2 ist zum Verbinden mit dem zweiten Gehäuseteil 6 mit einer Führung versehen. Diese Führung ist in Fig. 1 beispielhaft als Drehführung 10 in Form eines Gelenkes ausgeführt. Durch diese Drehführung 10 ist der erste Gehäuseteil 2 mit dem zweiten Gehäuseteil 6 beweglich verbunden. Der erste Gehäuseteil 2 ist, wie beispielhaft in Fig. 1 dargestellt, im Anschluss an den Netzsteckergrundkörper 4 gabelförmig ausgebildet. Die Drehführung 10 befindet sich an den Gabelenden 5 des ersten Gehäuseteils 2 und ist mit Rastpositionen versehen in denen die Gehäuseteile 2, 6 zueinander fixiert sind.

Der zweite Gehäuseteil 6 besteht aus einem Grundkörper 7, der mit einer Führung versehen, durch die der Grundkörper 7 des zweiten Gehäuseteils 6 beweglich mit dem ersten Gehäuseteil 2 verbunden ist. Diese Führung ist in Fig. 1 beispielhaft als Drehführung 10 ausgebildet. Am Grundkörper 7 befindet sich der Endgerätestecker 8 zum Anschluss des Endgerätes an den Spannungswandler 1. In Fig. 1 ist der Endgerätestecker 8 beispielhaft als Koaxialstecker dargestellt, der aus dem Grundkörper 7 herausragt. Der Endgerätestecker 8 kann in unterschiedlichen Formen ausgeführt sein, damit der Spannungswandler 1 für viele verschiedene Endgeräte adaptierbar ist. Damit ist der Spannungswandler 1 für unterschiedlichste Hersteller von Endgeräten einsetzbar, die ihre Endgeräte mit unterschiedlichen Anschlüssen ausführen.

Das zweite Gehäuseteil 6 bildet ferner eine Aufnahme 9 aus. Die Aufnahme 9 hat die Aufgabe, das auf den Endgerätestecker aufgesteckte Endgerät haltend zu umgeben. Die Aufnahme 9 kann, wie in Fig. 1 gezeigt, als Schacht ausgeführt sein, so dass ein Endgerät in einer Bestückungsrichtung E eingeschoben werden kann. Die Form der Aufnahme 9 kann, je nach Endgerät unterschiedlich ausgestaltet sein. In Fig. 1 ist die Aufnahme 9 als dünnwandige, U-förmige Schale ausgeführt.

Der zweite Gehäuseteil 6 kann vom ersten Gehäuseteil 2 abgetrennt werden, wodurch ein leichtes Auswechseln des zweiten Gehäuseteils 6 möglich ist. Dies kann insbesondere bei Verschleiß des zweiten Gehäuseteils 6 nötig sein. Des Weiteren ist es dadurch auch möglich, verschiedene Ausführungsformen des zweiten Gehäuseteils 6 an demselben ersten Gehäuseteil 2 anzuschließen, wenn beispielsweise die Verwendung für ein anderes Endgerät erfolgen soll.

In Fig. 1 ist der Spannungswandler 1 in einer ersten Ladeposition beispielhaft dargestellt. Diese erste Lageposition ist in Fig. 1 derart dargestellt, dass der erste Gehäuseteil 2 mit dem Netzstecker 3, 4 zu dem zweiten Gehäuseteil 6 mit dem Endgerätestecker 8 zueinander fluchtend, in einem Winkel im Bereich von ungefähr 165° bis 195°, bevorzugt aber von etwa 180° bezogen auf die Drehführung 10 steht. Die Bestückungsrichtung E und die Einsteckrichtung S sind im Wesentlichen parallel zueinander ausgerichtet. In der so dargestellten Position kann der Spannungswandler 1 beispielsweise in eine waagerecht stehende Netzsteckdose, einer sogenannten Tischsteckdose, betrieben werden.

In Fig. 2 ist der Spannungswandler 1 in einer zweiten Ladeposition beispielhaft dargestellt. In dieser zweiten Ladeposition kann der Spannungswandler 1 in eine Netzsteckdose eingesteckt werden, die in ihrer Position von der der ersten Ladeposition abweicht. Der zweite Gehäuseteil 6 ist auch in dieser Ladeposition in eine zum Aufnehmen des Endgerätes geeignete Position gebracht. In der in Fig. 2 beispielhaft dargestellten zweiten Ladeposition stehen der erste Gehäuseteil 2 und der zweite Gehäuseteil 6 in einem Winkel im Bereich von in etwa 75° bis 90°, bevorzugt aber in einem im Wesentlichen rechten Winkel zueinander, wobei die Bestückungsrichtung E und die Einsteckrichtung S im Wesentlichen quer zueinander ausgerichtet sind. In der zweiten Ladeposition kann der Spannungswandler 1 mit dem Netzstecker 3, 4 in eine senkrecht stehende Netzsteckdose, eine sogenannte Wandsteckdose, gesteckt werden. Das Endgerät kann in dieser Position senkrecht stehend auf den Endgerätestecker 8 aufgesteckt werden und wird von der Aufnahme 9 gehalten. Die Ausrichtung der beiden Gehäuseteile 2, 6 in einer der Ladepositionen kann von der in etwa rechtwinkeligen oder der fluchtenden abweichen, um beispielsweise die Ablesbarkeit eines geneigten Displays des Endgerätes, z.B. eines Mobiltelefons, zu verbessern.

In der Fig. 3 ist der Spannungswandler 1 beispielhaft in einer Transportposition dargestellt. In dieser Position sind die beiden Gehäuseteile 2, 6 so zueinander positioniert, dass sie eine für den Transport des Spannungswandlers 1 ideale Position einnehmen, in der der vom Spannungswandler 1 eingenommene Raum so klein wie möglich ist. In dem in Fig. 3 dargestellten Beispiel stehen der erste Gehäuseteil 2 und der zweite Gehäuseteil 6 in einem Winkel von etwa 0° zueinander und sind somit ineinander geklappt. Die Bestückungsrichtung E und die Einsteckrichtung S sind im Wesentlichen parallel zueinander ausgerichtet. In dieser Position sind die Abmaße des Spannungswandlers 1 reduziert und er bildet im Wesentlichen eine Quaderform aus, wobei die Netzsteckerstifte nicht wesentlich über den zweiten Gehäuseteil 6 hinausragen bzw. auch vollständig aufgenommen sein können. Hierdurch ist die äußere Form des Spannungswandlers 1 in der Transportposition für den Transport besonders vorteilhaft.

Dadurch, dass die Aufnahme 9 in Fig. 1 U-förmig ausgeführt ist, umschließt sie schützend und platzsparend den ersten Gehäuseteil 2.

In der in Fig. 3 beispielhaften Darstellung wird der Endgerätestecker 8 in der Transportposition durch den ersten Gehäuseteil 2 geschützt. Dieser Endgerätestecker 8 ist sehr empfindlich und kann beim Transportieren leicht abbrechen, wenn er nicht geschützt wird. Bei dem Spannungswandler 1, der in Fig. 3 beispielhaft dargestellt ist, wird dies durch eine Aussparung 11 in dem ersten Gehäuseteil 2 erreicht. Diese Aussparung 11 umgibt den Endgerätestecker 8 in der Transportposition schützend.

Durch die Drehführung 10 sind die beiden Gehäuseteile 2 und 6 zu einem Gehäuse 12 verbunden und in der Transportposition bzw. den Ladepositionen durch Rastpositionen zueinander fixiert.

Die Drehführung 10 zwischen dem ersten Gehäuseteil 2 und dem zweiten Gehäuseteil 6 überträgt, zumindest in den Ladepositionen, den elektrischen Strom, der von dem Netzstecker 3 über die Schaltung zur Spannungswandlung (nicht dargestellt) zum Endgerätestecker 8 fließt. Dies kann durch elektrisch leitende Schleifkontaktscheiben (nicht dargestellt) auf jeder Seite der Drehführung 10 geschehen. Dadurch wird kein zusätzliches Kabel, außerhalb des Spannungswandlers benötigt. Somit wird die Gefahr eines Kabelbruchs vermieden, was andernfalls zu einem Ausfall des Spannungswandlers 1 führen würde.

## Patentansprüche

1. Spannungswandler (1) zum Laden mobiler Endgeräte der Kommunikations- und Unterhaltungstechnik, wie Mobiltelefone, MP3-Spieler oder PDAs, mit einem Gehäuse (12),
das einen in einer Einsteckrichtung (S) an eine Netzspannungsquelle anschließbaren Netzstecker (3, 4), einen an ein Endgerät anschließbar ausgestalteten Endgerätestecker (8) und eine Schaltung zur Spannungswandlung wenigstens teilweise umgibt und
das ein erstes Gehäuseteil (2) und ein mit diesem durch eine Führung beweglich verbundenes zweites Gehäuseteil (6), das als eine das Endgerät in einer Bestückungsrichtung (E) aufnehmende Aufnahme (9) ausgeführt ist, umfasst,
wobei die Gehäuseteile relativ zueinander von einer Transportposition in wenigstens zwei Ladepositionen beweglich ausgestaltet sind und
der in der Transportposition vom Spannungswandler eingenommene Raum kleiner als in den Ladepositionen ist,
**dadurch gekennzeichnet, dass**
in der ersten Ladeposition die Bestückungsrichtung (E) und die Einsteckrichtung (S) im Wesentlichen parallel und
in der zweiten Ladeposition die Bestückungseinrichtung (E) und die Einsteckrichtung (S) im Wesentlichen quer zueinander ausgerichtet sind.

2. Spannungswandler (1) nach Anspruch 1, **dadurch gekennzeichnet, dass** die Führung, durch die der zweite Gehäuseteil (6) beweglich mit dem ersten Gehäuseteil (2) verbunden ist, mindestens zwei Rastpositionen ausbildet.

3. Spannungswandler (1) nach Anspruch 1 oder 2, **dadurch gekennzeichnet, dass** die Führung, durch die der zweite Gehäuseteil (6) beweglich mit dem ersten Gehäuseteil (2) verbunden ist, als eine Drehführung ausgestaltet ist.

4. Spannungswandler (1) nach einem der oben genannten Ansprüche, **dadurch gekennzeichnet, dass** der zweite Gehäuseteil (6) als ein in der Transportposition den Netzstecker (3, 4) zumindest abschnittsweise umgebendes Schutzgehäuse ausgestaltet ist.

5. Spannungswandler (1) nach einem der oben genannten Ansprüche, **dadurch gekennzeichnet, dass** der Spannungswandler (1) in eine zweite, von der ersten Ladeposition und der Transportposition unterschiedliche Ladeposition überführbar ausgestaltet ist.

6. Spannungswandler (1) nach einem der oben genannten Ansprüche, **dadurch gekennzeichnet, dass** der Spannungswandler (1) in der Transportposition derart ausgeführt ist, dass der erste Gehäuseteil (2) an den zweiten Gehäuseteil (6) geklappt ist.

7. Spannungswandler (1) nach einem der oben genannten Ansprüche, **dadurch gekennzeichnet, dass** in der ersten Ladeposition der Netzstecker (3, 4) und der Endgerätestecker (8) zueinander fluchtend ausgeführt sind.

8. Spannungswandler (1) nach einem der oben genannten Ansprüche, **dadurch gekennzeichnet, dass** in der zweiten Ladeposition der Netzstecker (3, 4) sich vom Endgerätestecker (8) in einem im Wesentlichen rechten Winkel weg erstreckt.

9. Spannungswandler (1) nach einem der oben genannten Ansprüche, **dadurch gekennzeichnet, dass** der erste Gehäuseteil (2) in der Transportposition den Endgerätestecker (8) schützend umschließend ausgestaltet ist.

10. Spannungswandler (1) nach einem der oben genannten Ansprüche, **dadurch gekennzeichnet, dass** die Führung, durch die der zweite Gehäuseteil (6) beweglich mit dem ersten Gehäuseteil (2) verbunden ist, den ersten und zweiten Gehäuseteil elektrisch leitend verbindet.

11. Spannungswandler (1) nach einem der oben genannten Ansprüche, **dadurch gekennzeichnet, dass** der Netzstecker (3, 4) für unterschiedliche länderspezifische Netzsteckdosen austauschbar zum Spannungswandler (1) angeordnet ist.

12. Spannungswandler (1) nach einem der oben genannten Ansprüche, **dadurch gekennzeichnet, dass** die Schaltung zur Spannungswandlung in den ersten Gehäuseteil (2) integriert ist.

13. Spannungswandler (1) nach einem der oben genannten Ansprüche, **dadurch gekennzeichnet, dass** der erste Gehäuseteil (2) gabelförmig, an den Gabelenden (5) mit einer Drehführung versehen, ausgeführt ist.

14. Spannungswandler (1) nach einem der oben genannten Ansprüche, **dadurch gekennzeichnet, dass** der Endgerätestecker (8) austauschbar am Spannungswandler (1) angeordnet ist.

15. Spannungswandler (1) nach einem der oben genannten Ansprüche, **dadurch gekennzeichnet, dass** in der Transportposition die Bestückungsrichtung (E) und die Einsteckrichtung (S) im Wesentlichen parallel zueinander ausgerichtet sind.

## Claims

1. A voltage transformer (1) for charging mobile terminals used in the field of communications and entertainment technology, such as mobile phones, MP3 players or PDAs,
including a housing (12)
which encloses, at least partially, a mains plug (3, 4) connectable to a mains voltage source in a plug-in direction (S), a terminal plug (8) adapted to be connectable to a terminal, and a voltage-transforming circuit, and
which comprises a first housing component (2) and a second housing component (6) movably connected to said first housing component (2) by a guide means and implemented as a reception means (9) for receiving therein the terminal in an insertion direction (E),
wherein said housing components are implemented such that they are movable relative to one another from a transport position to at least two charging positions, and
wherein the space occupied by the voltage transformer at the transport position is smaller than that occupied at the charging positions,
**characterized in that**, at the first charging position, the insertion direction (E) and the plug-in direction (S) are oriented essentially parallel to one another, and
that, at the second charging position, the insertion direction (E) and the plug-in direction (S) are oriented essentially transversely to one another.

2. A voltage transformer (1) according to claim 1, **characterized in that** the guide means through which the second housing component (6) is movably connected to the first housing component (2) defines at least two locking positions.

3. A voltage transformer (1) according to claim 1 or 2, **characterized in that** the guide means through which the second housing component (6) is movably connected to the first housing component (2) is implemented as a rotary guide means.

4. A voltage transformer (1) according to one of the above-mentioned claims, **characterized in that** the second housing component (6) is implemented as a protective casing which encloses the mains plug (3, 4), at least in certain sections thereof, at the transport position.

5. A voltage transformer (1) according to one of the above-mentioned claims, **characterized in that** the voltage transformer (1) is adapted to be moved to a second charging position which is different from the first charging position and the transport position.

6. A voltage transformer (1) according to one of the above-mentioned claims, **characterized in that** the voltage transformer (1) is implemented such that, at the transport position, the first housing component (2) is folded onto the second housing component (6).

7. A voltage transformer (1) according to one of the above-mentioned claims, **characterized in that** the mains plug (3, 4) and the terminal plug (8) are implemented such that they are in alignment with one another at the first charging position.

8. A voltage transformer (1) according to one of the above-mentioned claims, **characterized in that,** at the second charging position, the mains plug (3, 4) extends away from the terminal plug (8) at an angle of substantially 90°.

9. A voltage transformer (1) according to one of the above-mentioned claims, **characterized in that** the first housing component (2) is implemented such that it protectively encloses the terminal plug (8) at the transport position.

10. A voltage transformer (1) according to one of the above-mentioned claims, **characterized in that** the guide means through which the second housing component (6) is movably connected to the first housing component (2) connects said first and second housing components in an electrically conductive manner.

11. A voltage transformer (1) according to one of the above-mentioned claims, **characterized in that** the mains plug (3, 4) is arranged such that it can be exchanged for use with the voltage transformer (1) so as to be compatible with different, country-specific mains sockets.

12. A voltage transformer (1) according to one of the above-mentioned claims, **characterized in that** the voltage-transforming circuit is integrated in the first housing component (2).

13. A voltage transformer (1) according to one of the above-mentioned claims, **characterized in that** the first housing component (2) has a fork-shaped structural design and is provided with a rotary guide means at the fork ends (5).

14. A voltage transformer (1) according to one of the above-mentioned claims, **characterized in that** the terminal plug (8) is replaceably arranged on the voltage transformer (1).

15. A voltage transformer (1) according to one of the above-mentioned claims, **characterized in that**, at the transport position, the insertion direction (E) and the plug-in direction (S) extend essentially parallel to one another.

## Revendications

1. Transformateur de tension (1) pour charger des terminaux mobiles de la technique des communications et du divertissement tels que les téléphones mobiles, les lecteurs MP3 ou les assistants numériques personnels (PDA),
comprenant un boîtier (12),
qui entoure au moins en partie une fiche secteur (3, 4) pouvant être raccordée à une source de courant secteur dans un sens d'enfichage (S), une fiche de terminal (8) réalisée de manière à pouvoir être raccordée à un terminal et un circuit pour transformer la tension et
qui comprend un premier élément de boîtier (2) et un deuxième élément de boîtier (6) relié à celui-ci de manière mobile par l'intermédiaire d'un guidage, le deuxième élément étant réalisé sous forme de logement (9) recevant le terminal dans un sens d'insertion (E), lesdits éléments de boîtier étant réalisés de manière mobile l'un par rapport à l'autre pour passer d'une position de transport à au moins deux positions de chargement et l'espace occupé par le transformateur de tension en position de transport étant inférieur à celui occupé en position de chargement,
**caractérisé en ce que**
le sens d'insertion (E) et le sens d'enfichage (S) sont orientés essentiellement parallèlement l'un par rapport à l'autre dans la première position de chargement et **en ce que** le sens d'insertion (E) et le sens d'enfichage (S) sont orientés essentiellement transversalement l'un par rapport à l'autre dans la deuxième position de chargement.

2. Transformateur de tension (1) selon la revendication 1, **caractérisé en ce que** le guidage, par l'intermédiaire duquel le deuxième élément de boîtier (6) est relié de manière mobile au premier élément de boîtier (2), est réalisé avec au moins deux positions d'encliquetage.

3. Transformateur de tension (1) selon la revendication 1 ou 2, **caractérisé en ce que** le guidage, par l'intermédiaire duquel le deuxième élément de boîtier (6) est relié de manière mobile au premier élément de boîtier (2), est réalisé sous forme de guidage pivotant.

4. Transformateur de tension (1) selon l'une quelconque des revendications précédentes, **caractérisé en ce que** le deuxième élément de boîtier (6) est réalisé sous forme de boîtier de protection qui entoure au moins en partie la fiche secteur (3, 4) en position de transport.

5. Transformateur de tension (1) selon l'une quelconque des revendications précédentes, **caractérisé en ce que** le transformateur de tension (1) est réalisé de manière à pouvoir être mis dans une deuxième position de chargement différente de la première position de chargement et de la position de transport.

6. Transformateur de tension (1) selon l'une quelconque des revendications précédentes, **caractérisé en ce que** le transformateur de tension (1), en position de transport, est réalisé de telle manière que le premier élément de boîtier (2) est rabattu sur le deuxième élément de boîtier (6).

7. Transformateur de tension (1) selon l'une quelconque des revendications précédentes, **caractérisé en ce que**, dans la première position de chargement, la fiche secteur (3, 4) et la fiche de terminal (8) sont alignées.

8. Transformateur de tension (1) selon l'une quelconque des revendications précédentes, **caractérisé en ce que**, dans la deuxième position de chargement, la fiche secteur (3, 4) s'étend à partir de la fiche de terminal (8) selon un angle essentiellement droit.

9. Transformateur de tension (1) selon l'une quelconque des revendications précédentes, **caractérisé en ce que** le premier élément de boîtier (2), en position de transport, est réalisé de telle manière qu'il entoure la fiche de terminal (8) pour la protéger.

10. Transformateur de tension (1) selon l'une quelconque des revendications précédentes, **caractérisé en ce que** le guidage, par l'intermédiaire duquel le deuxième élément de boîtier (6) est relié de manière mobile au premier élément de boîtier (2), établit une connexion électrique entre ledit premier et ledit deuxième élément de boîtier.

11. Transformateur de tension (1) selon l'une quelconque des revendications précédentes, **caractérisé en ce que** la fiche secteur (3, 4) est disposée sur le transformateur de tension (1) de manière interchangeable pour les différentes prises de courant spécifiques de chaque pays.

12. Transformateur de tension (1) selon l'une quelconque des revendications précédentes, **caractérisé en ce que** le circuit pour transformer la tension est intégré dans le premier élément de boîtier (2).

13. Transformateur de tension (1) selon l'une quelconque des revendications précédentes, **caractérisé en ce que** le premier élément de boîtier (2) est réalisé sous forme de fourche pourvue, au niveau des extrémités de la fourche (5), d'un guidage pivotant.

14. Transformateur de tension (1) selon l'une quelconque des revendications précédentes, **caractérisé en ce que** la fiche de terminal (8) est disposée sur le transformateur de tension (1) de manière interchangeable.

15. Transformateur de tension (1) selon l'une quelconque des revendications précédentes, **caractérisé en ce qu'**en position de transport, le sens d'insertion (E) et le sens d'enfichage (S) sont orientés essentiellement parallèlement l'un par rapport à l'autre.
